# EUROPEAN PATENT APPLICATION

(11) **EP 1 591 707 A1**
(43) Date of publication of application: **02.11.2005**
(21) Application number: 04425298.9
(22) Date of filing: 29.04.2004
(51) Int. Cl.: F16L 25/00

(54) **Watertight connection system for PE corrugated pipes of sewers**

(71) Applicant: Sirci S.p.A., 06024 Gubbio, PG (IT)
(72) Inventor: Colaiacovo, Giuseppe, 06024 Gubbio (IT)
(74) Representative: Baldi, Claudio

(57) **Abstract**

The present invention refers to a watertight connection system for PE corrugated pipes of sewers, of the type that makes use of a pipe coupling for consecutive pairs of externally corrugated pipes (2), characterised in that it provides for the injection of polyurethane expanding resin through holes drilled on the structure of the pipe coupling (1), in such a way that the resin can fill one of the perimeter grooves externally located on the pipes (2) inserted into the pipe coupling (1).

## Description

The present patent application refers to watertight connection system for polyethylene (PE) corrugated pipes of sewers.

The PE corrugated pipes that are commonly used in sewers are extruded pipes composed of two concentric polyethylene layers, of which the internal layer has a smooth surface to favour the sewage flow, and the external layer has a corrugated surface to provide the necessary rigidity to the pipe.

Since the pipes are produced with 6 or 12-metre lengths, it appears obvious that suitable watertight connections must be made between consecutive sections of pipes to realise a drainage system.

Although functionally acceptable, the solutions that have been adopted so far are negatively affected by high constructive costs and complicated installation.

According to different possible solutions, the heads of two consecutive sections of the pipes are joined together in "mirrored" position; or two pipes can be joined together by means of a special plastic coupling that incorporates electrical resistances designed to be powered and partially melt the plastic structure of the coupling to ensure the irreversible watertight connection of the coupling with the ends of the pipe that have been inserted into it.

A simpler, although expensive and complicated, technology has been known for a long time.

According to this technology, the two sections of corrugated pipe are joined together by means of a coupling (sleeve or cup) that co-operates with gaskets made of rubber or other materials with similar tightness properties.

This type of couplings is made of PE short cylindrical tubular elements, generally obtained with injection moulding and provided with internal diameter slightly higher that the external diameter of the pipes to be connected; it being provided that one coupling and two gaskets (one for each pipe end) are used for each consecutive pair of pipes.

The connection element between two consecutive pipes can also be represented by a cup, that is to say a cylindrical section with larger cross-section located at one end of each PE corrugated pipe and obtained during or immediately after the extrusion process.

The cup (that is to say the end with larger cross-section) of each pipe can exactly house the end with standard cross-section of the consecutive pipe with male-female connection, with the interposition of a suitable gasket.

Since the difference in cross-section between the cylindrical couplings (or cups) and the pipes inserted inside the coupling is quite small because of watertight requirements, it appears evident that the male-female connection between pipes and couplings is not very easy.

In fact, the slightest misalignment between the end of the pipe (male element) and the coupling element (female element) makes connection very difficult, if not impossible.

If we consider that pipes are often big and large and these operations are often carried out in excavations, the successful coupling between the male and female elements is very difficult to obtain.

The analysis, of the current state of the art with costs and drawbacks has resulted in the ideation of the connection system for PE corrugated pipes of the invention.

The main purpose of the invention is to provide a connection system for the aforementioned pipes characterised by excellent technical-functional features, lower costs, easier and faster installation compared to traditional technologies.

The idea of the invention is to connect two corrugated pipes by means of a special coupling, preferably provided with bi-truncated conical structure with central narrower cross-section, basically having the same width as the section of the tubes to be connected and two truncated conical ends in symmetrically opposite position, with increasing section from inside outwards.

The presence of the two truncated-conical ends of the couplings (with bottle-neck configuration) facilitates the operations that must be carried out to insert the ends of the pipes into the couplings.

Due to the difference in cross-section between the mouth of each truncated-conical section of the coupling and the pipe to be inserted into the coupling, the insertion of the pipe end into the truncated-conical section of the coupling is extremely easy and fast.

The insertion of the pipe end into the coupling terminates when the pipe end touches a suitable annular rib that protrudes from the internal perimeter of the coupling in its narrower central section.

Once this first operation has been completed, the connection between pipe and coupling must be made stable and watertight; the solution adopted is probably the cleverest and most innovative characteristic of the system of the invention.

As a matter of fact, the solution consists in injecting polyurethane expanding resin into one of the grooves located on the section of pipe inserted into the coupling; in particular, resin is injected through holes drilled on the coupling structure in correspondence with the groove to be filled with resin.

Immediately after the injection, the resin considerably increases in volume and perfectly fills the groove of the corrugated pipe in which it has been injected, thus irreversibly joining the external wall of the pipe and the internal wall of the coupling.

Because of its natural tendency to expansion, the resin fills the perimeter space between pipe and coupling in a continuous and complete way.

In other words, the resin ensures a complete watertight connection between pipe and coupling, acting as a totally insuperable perimeter barrier against sewage leakage. For major clarity the description of the invention continues with reference to the enclosed drawings, which are intended for purposes of illustration only and not in a limiting sense, whereby:
- Figure 1 is a cross-sectional view of the coupling with a plane parallel to its longitudinal axis;
- Figure 2 is a cross-sectional view of a PE corrugated pipe fit for being inserted and joined inside the coupling of Fig. 1;
- Figures 3 and 4 are enlargements showing the two steps of the irreversible watertight connection between coupling and pipe, according to the system of the invention.

With reference to the aforementioned figures, the system of the invention makes use of a special coupling (1), preferably made of PE and provided with bi-truncated conical structure, internal smooth walls and external corrugated walls.

In correspondence with its centre-line, the coupling (1) is provided with an internal annular rib (1a) designed to stop the pipes (2) that are inserted into the coupling (1) from opposite sides.

Once the pipe (2) has been inserted inside the coupling (1), bicomponent polyurethane expanding resin (R) is injected into one of the grooves (2a) of the pipe (2).

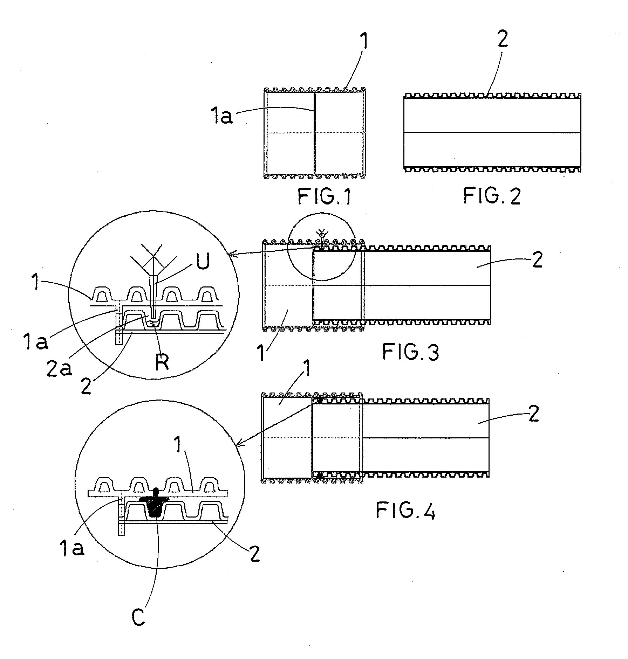

In particular, as shown in Fig. 3, resin (R) is injected through one or more nozzles (U) inserted through holes drilled on the structure of the coupling (1).

As shown in Fig. 4, after injection and spontaneous expansion, the resin fills and seals the entire space between the bottom of the injection groove and the internal wall of the coupling (1) along the entire perimeter of the pipe (2).

Once it solidifies, the perimeter "cord" (C) formed by the expanding resin stabilises the connection between coupling (1) and pipe (2) and creates a watertight perimeter barrier between the two elements.

## Claims

1. Watertight connection system for PE corrugated pipes of sewers, of the type that makes use of a pipe coupling for consecutive pairs of externally corrugated pipes, **characterised in that** it provides for the injection of polyurethane expanding resin (R) through holes drilled on the structure of the coupling (1), in such a way that the resin can entirely fill one of the perimeter grooves (2a) externally located on the pipes (2) inserted into the coupling (1).

2. System as defined in claim 1, **characterised in that** in correspondence with its centre-line the coupling (1) is provided with an internal annular rib (1a) designed to stop the sections of pipe that are inserted into the coupling (1) from opposite sides.

3. System as defined in the first or both claims, **characterised in that** the coupling (a) has a bi-truncated conical structure, with central narrower cross-section, basically having the same width as the section of the tubes to be connected, and two truncated conical ends in symmetrically opposite position.

4. System as defined in one or more of the preceding claims, **characterised in that** the coupling (a) has a PE double-wall structure, with one internal smooth wall and one external corrugated wall.
